(19) Europäisches Patentamt
European Patent Office
Office européen des brevets

(11) **EP 1 241 437 B1**

(12) **EUROPÄISCHE PATENTSCHRIFT**

(45) Veröffentlichungstag und Bekanntmachung des Hinweises auf die Patenterteilung:
**09.11.2005   Patentblatt 2005/45**

(51) Int Cl.⁷: **G01B 7/00**, G01D 5/12, F16K 37/00

(21) Anmeldenummer: **02100160.7**

(22) Anmeldetag: **21.02.2002**

(54) **Magnetischer Positionssensor, Ventilstössel mit Magnethülse, Ringscheiben**

Magnetical position sensor, valve stem with magnetic tube, ring slices

Capteur de position magnétique, poussoir de soupape avec manchon magnétique, disques annulaires

(84) Benannte Vertragsstaaten:
**DE FR GB**

(30) Priorität: **23.02.2001   DE 10108732**

(43) Veröffentlichungstag der Anmeldung:
**18.09.2002   Patentblatt 2002/38**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**DE FR GB**

(72) Erfinder:
• **Wendt, Matthias, Dr-Ing.**
**Weisshausstrasse 2, 52066 Aachen (DE)**
• **Elferich, Reinhold**
**Weisshausstrasse 2, 52066 Aachen (DE)**

(74) Vertreter: **Volmer, Georg**
**Philips Intellectual Property & Standards GmbH,**
**Postfach 50 04 42**
**52088 Aachen (DE)**

(56) Entgegenhaltungen:
EP-A- 0 668 118          EP-A- 0 707 195
EP-A- 0 800 055          EP-A- 0 936 438

EP 1 241 437 B1

**Beschreibung**

Die Erfindung bezieht sich auf eine Vorrichtung mit einem magnetischen Positionssensor, der aus einer Feldsensorik und einer Auswertelektronik besteht, für Linearbewegungen eines stabförmigen Bauteiles, insbesondere des Stößels eines Aktuators, mit einem, ein magnetisches Feld erzeugenden Element und einem den Winkel der magnetischen Feldstärke dieses Feldes messenden Positionssensor, wobei das von diesem Sensor ermittelte Feldwinkelsignal der Weglängenbestimmung dient.

Aus der US-A-5 570 015 ist eine magnetische Positionsmessanordnung bekannt, mit der Linearbewegungen eines stabförmigen Bauteiles, beispielsweise eines Ventilstößels, messbar sind. Eine besondere Messeinheit, die aus einem nur zu den Messzwecken benutzten Stößel und dem Positionssensor besteht, ist an das stabförmige Bauteil, dessen Bewegungen zu messen sind, angesetzt. In den Stößel der Messeinheit ist ein stabförmiger Magnet eingelassen, der in Längsrichtung des Stößels ein magnetisches Feld erzeugt. Der Positionssensor ist ortsfest im Bereich des magnetischen Feldes angeordnet. Der Positionssensor misst bei Relativbewegungen des Stößels gegenüber seiner Position mit einer Feldsensorik, die mittels einer Auswertelektronik den Winkel der magnetischen Feldstärke ermittelt, in etwa proportional den Verstellweg. Die Wegproportionalität besteht dabei aber nur in einem gewissen Bereich.

Der Nachteil dieser Anordnung besteht außer dem großen Raumbedarf darin, dass sich der Stößel nicht drehen darf. Wird eine Schirmung verwendet, dann arbeitet die Vorrichtung nicht mehr genügend linear und ist nicht mehr genau genug.

Aus der Europäischen Patentanmeldung EP 0 668 118 A1 ist ein Elektrowerkzeug bekannt, bei der die Position eines axial verschiebbaren, zylindrischen Trägers dadurch gemessen wird, dass ein relativ zum Träger feststehender Sensor das Magnetfeld eines den Träger umschließenden Magnetringes misst. Das Ausgangssignal des Sensors ist dabei abhängig von der relativen Position von Sensor und Magnetring.

Es ist Aufgabe der Erfindung, eine Vorrichtung mit einem magnetischen Positionssensor zu schaffen, der einfacher und kleiner ausgebildet ist, vor allem aber seine Messungen berührungslos unmittelbar am stabförmigen Bauteil des Aktuators vornimmt.

Die gestellte Aufgabe ist erfindungsgemäß nach dem Anspruch gelöst.

Wenn das das magnetische Feld erzeugende Element unmittelbar auf dem Stößel des Aktuators festgesetzt ist, dann bedarf es keines besonderen Stößels einer Messeinheit. Ein weiterer Vorteil ist, dass sich der Stößel um seine eigene Achse drehen kann, ohne dass dies einen Einfluss auf die Messung hat. Dies ist sehr wichtig, weil ein runder Aktuatorstößel für die Messung in diesem Fall keine verdrehsichere Führung benötigt.

Für einen störungsfreien Betrieb ist es von Vorteil, wenn der Aktuatorstößel aus einem nicht oder nur schwach ferromagnetischen Material besteht. Der Positionssensor ist auch bei unzugänglichen Stößelenden einsetzbar.

Im Hinblick auf die Magnethülsenlänge ergibt sich ein langer Messbereich. Dies gestattet eine kleine Bauform bei einem temperatur-unempfindlichen Messprinzip. Weiterhin ergibt sich eine hohe Linearität des Zusammenhangss zwischen Position und Messsignal. Eine zusätzliche Auswertvorrichtung mittels einer Sensorkennlinie zur Steigerung der Genauigkeit kann hier vermieden werden.

Nach einer weiteren Ausgestaltung der Erfindung ist vorgesehen, dass die Feldsensorik magnetoresistive Elemente, Hallsensoren oder Feldspulen enthält.

In weiterer Ausgestaltung der Erfindung ist vorgesehen, dass die Magnethülse, sei es sie besteht aus durchgehendem Material oder sie ist zusammengesetzt aus Ringscheiben, zur Bildung einer Mindestfeldstärke ein Verhältnis von Durchmesser zu Länge im Bereich von 2/3 bis 3/2, vorzugsweise in der Nähe von 1, aufweist.

Nach einer weiteren Ausgestaltung der Erfindung ist vorgesehen, dass die Feldsensorik auf der Innenseite einer hülsenförmigen Abschirmung angeordnet sind. Diese Abschirmung kann einen runden oder eckigen Querschnitt haben.

In weiterer Ausgestaltung der Erfindung ist vorgesehen, dass sich innerhalb der Abschirmung der gesamte Positionssensor, d.h. sowohl die Feldsensorik als auch die Auswertelektronik, befinden. Diese Kombination zeichnet sich als sehr einfach und flexibel aus.

Nach einer weiteren Ausgestaltung der Erfindung ist vorgesehen, dass die Magnethülse in eine ringförmige Ausnehmung des stabförmigen Bauteiles eingelassen ist und sich um die eingelassene Hülse eine nicht ferromagnetische Stößelhülse größerer Länge schließt. Die Stößelhülse kann auch in das stabförmige Bauteil eingelassen sein.

Nach einer weiteren Ausgestaltung der Erfindung ist vorgesehen, dass das stabförmige Bauteil von einer nicht ferromagnetischen Linearführungshülse umschlossen ist, in deren Hülsendurchbruch es mit der Magnethülse gleiten kann, und dass die nicht ferromagnetische Linearführungshülse von einer hülsenförmigen Abschirmung umschlossen ist, innerhalb der sich die Feldsensorik befindet.

In weiterer Ausgestaltung der Erfindung ist vorgesehen, dass die Auswertelektronik an der Außenseite der Abschirmung angeordnet ist und mittels eines durch die Abschirmung hindurchgeführten Trägers die Sensoren innerhalb der Linearführungshülse trägt.

Nach einer weiteren Ausgestaltung der Erfindung ist vorgesehen, dass das stabförmige Bauteil im Bereich der Messvorrichtung aus zwei mittels einer zentrischen Zapfung verbundenen Teilen besteht und dass die Magnethülse sowie die Stößelhülse im Bereich der Zapfung auf das stabförmige Bauteil aufgeschoben sind

Auf diese Weise ist eine sehr einfache und zweckmäßige, sowie kleinbauende Messvorrichtung geschaffen, die insbesondere im automotiven Bereich günstig einsetzbar ist.

Die Erfindung wind anhand der Zeichnung näher erläutert. Es zeigen:

Fig 1 eine Prinzipdarstellung einer Vorrichtung mit magnetischem Positionssensor mit einem stabförmigen Bauteil, dessen axiale Verstellbewegungen ermittelt werden mit einer sich um das Bauteil schließenden, fest mit diesem verbundenen Magnethülse und einer Feldsensorik im Magnetfeld der Magnethülse.

Fig 2a und 2b Kennlinien der gemessenen Winkel über dem Weg,

Fig 3 eine Magnethülse, die aus mehreren Ringkörpern zusammengesetzt ist,

Fig 4 im Schnitt die Messvorrichtung mit einer Abschirmung, wobei die Magnethülse aus einem axial gleichförmigen Material besteht oder wie in Fig 3 aus mehreren Ringkörpern zusammengesetzt ist, und wobei innerhalb der Abschirmung eine Auswertelektronik mit der Feldsensorik angeordnet ist,

Fig 5 ein Diagramm mit Winkel/Wegkennlinien entsprechend der Anordnung nach Fig 4 mit einem Vergleich der bei der Verwendung der unterschiedlichen Magnethülsen auftretenden Messfehler,

Fig 6 eine Messvorrichtung mit einer in ein stabförmiges Bauteil integrierten Magnethülse und einen sehr kompakten abgeschirmten Aufbau,

Fig. 7 einen Schnitt VII-VII durch die Vorrichtung nach Fig. 6.

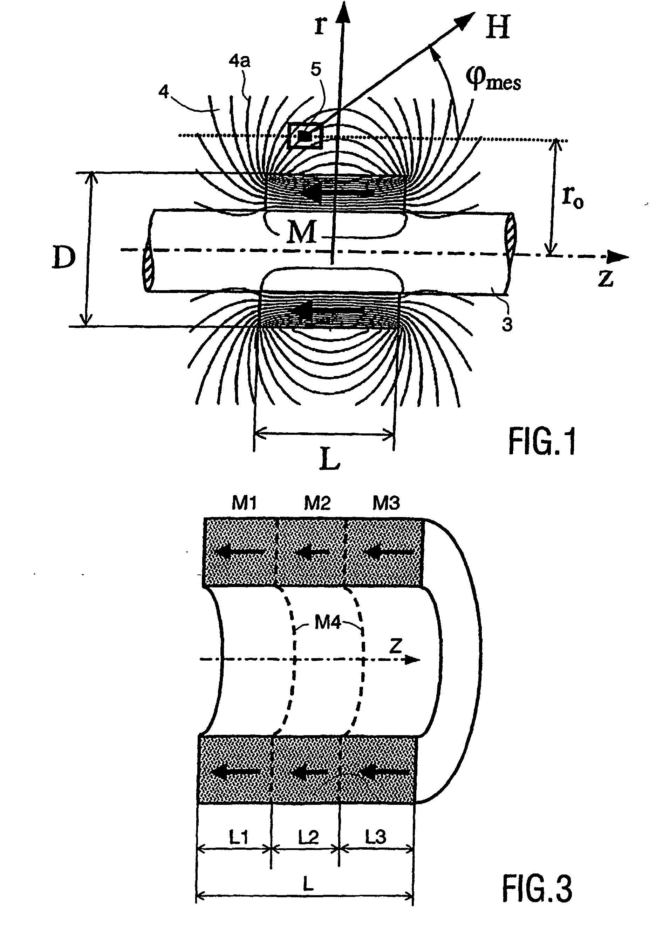

Fig 1 zeigt ein stabförmiges Bauteil, beispielsweise den Stößel 3 eines nicht dargestellten Ventils, das axiale Bewegungen ausführt. Auf dem Ventilstößel 3 sitzt fest mit ihm verbunden eine Magnethülse M, die ein magnetisches Feld 4 erzeugt, das anhand der Feldlinien 4a sichtbar gemacht ist. Die jeweiligen Feldlinien 4a sind Linien gleichen Vektorpotentiales. Im Magnetfeld 4 ist eine Feldsensorik 5 angeordnet, die das um sie herrschende Magnetfeld 4a ermittelt. Längs der Stößelachse z führt der Stößel z Linearbewegungen aus, wobei er sich auch um die Stößelachse z drehen kann. Die Magnethülse M hat eine Länge L. Der Außendurchmesser der Magnethülse ist mit D angegeben. $r_o$ ist der Abstand der Feldsensorik 5 von der Stößelachse z Die Magnetisierungsrichtung der Magnethülse liegt in der mit z bezeichneten axialen Richtung Die Feldsensorik 5 und eine Auswertelektronik 7 bilden zusammen einen Positionssensor.

Der zu messende Winkel ist $\varphi_{mes}$. Dies ist der Winkel der magnetischen Feldstärke H bezüglich der z-Achse Die Feldsensorik 5 gibt Feldstärkesignale an eine nicht dargestellte Auswertelektronik weiter, aus der diese den Feldwinkel ermittelt, der seinerseits Idealerweise dem Verstellweg entspricht.

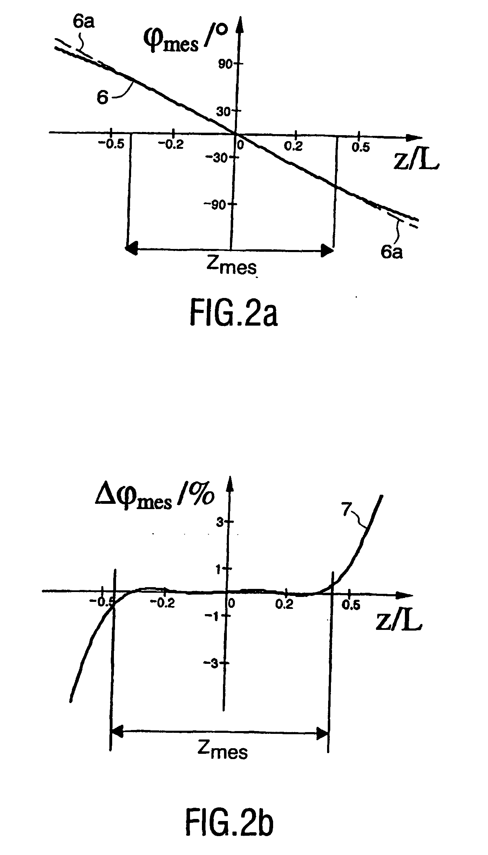

Fig. 2a zeigt anhand einer durchgezogenen Kennlinie 6 den gemessenen Feldwinkel über dem Verstellweg. Die darunterliegende gestrichelte Linie ist die Ideallinie. Es ist zu erkennen, dass die Kurve in Abhängigkeit vom Verstellweg im ausgewählten Verstellbereich $z_{mes}$, der etwa 80% der Magnetlänge entspricht, im wesentlichen geradlinig ist. Aus Fig 2b, die den Messfehler in Prozent über dem Weg anhand einer Kurve 7 zeigt, ist erkennbar, dass der Messfehler im Verstellbereich $z_{mes}$ von etwa - 0,4 bis + 0,4 (ca. 80% der Magnetlänge) sehr klein ist. Bei dem Diagramm ist der prozentuale Messfehler $\Delta\varphi_{mes}$ über dem Verstellweg z/L aufgetragen.

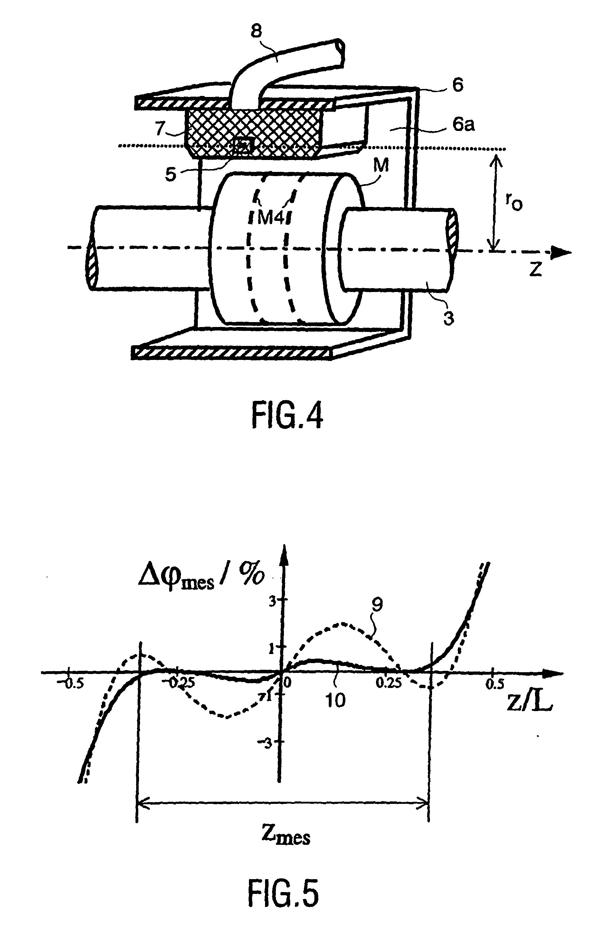

Die Figuren 2a und 2b stellen die Gegebenheiten dar, wenn bei guter Wahl der Anordnung keine Abschirmung nötig und vorhanden ist. Die Magnethülse besteht aus einem axial gleichförmigen Material. Häufig ist es in der Praxis nicht möglich, ohne Abschirmung zu arbeiten. Insbesondere wenn mehrere Messeinrichtungen in unmittelbarere Nachbarschaft betrieben werden. Dabei verschlechtern sich aber die Arbeitsergebnisse. Diese Verschlechterung lässt sich kompensieren und zwar mit einer axial strukturierten Magnethülse M, die in Fig. 3 erläutert ist.

Fig.3 zeigt eine Magnethülse M die aus drei aneinander gefügten Ringkörpern M1, M2 und M3 besteht. Der Aufbau ist symmetrisch, dh, die axialen Längen L1, L2 und L3 sind einander gleich. Hier können natürlich auch unterschiedliche Abmessungen gewählt werden. Es gibt verschiedene Möglichkeiten, die Ringkörper M1, M2, M3 auszubilden. Eine Möglichkeit besteht darin, sie aus voll aufmagnesiertem Material unterschiedlicher Remanenz zu fertigen. Eine andere Möglichkeit wäre, die einzelnen Ringkörper M1, M2, M3 aus dem gleichen Material zu fertigen und sie unterschiedlich stark aufzumagnetisieren. Eine weitere, wohl auch zu bevorzugende Möglichkeit ist, eine Magnethülse M aus einheitlichem Material zu verwenden und diese mittels einer geeigneten Vorrichtung längs der Stößelachse z unterschiedlich stark zu magnetisieren. Weitere Varianten sind durchaus denkbar. So kann man an weniger als drei Ringkörper oder auch an mehr als drei Ringkörper denken.

Um zu einer hinsichtlich der Messgenauigkeit und erzielbaren Mindestfeldtärke günstigen Hülsenlänge zu kommen, ist es vorgesehen, dass die Magnethülse, sei es sie besteht aus durchgehendem Material mit axial modifizierter Magnetisierung oder sie ist zusammengesetzt aus Ringscheiben (M1, M2, M3), zur Bildung einer Mindestfeldstärke ein Verhältnis von Durchmesser zu Länge im Bereich von 2/3 bis 3/2, vorzugsweise in der Nähe von 1, aufweist.

Fig. 4 zeigt, wie sich die Messvorrichtung gegen äußere Felder abschirmen lässt. Man erkennt in Fig. 4 den Stößel 3 mit der Stößelachse z Sitzt auf dem Stößel 3 eine Magnethülse M, die aus axial gleichförmigem Material (Version, bei der die gestrichelten Trennlinien M 4 wegzudenken sind), dann ergibt sich die in Fig.5 gestrichelt dargestellte Messfehlerkurve, die zwar vertretbar, aber als nicht erstrebenswert anzusehen ist. Sitzt aber auf dem Stößel 3 eine axial strukturierte Magnethülse M aus den drei unterschiedlichen Ringkörpern M1, M2, M3, wie sie in Fig. 3 dargestellt ist, dann lässt sich der Messfehler derart kompensieren, dass man die in Fig 5 dargestellte durchgezogene Fehlerkurve erhält, die den Anforderungen besonders gut gerecht wird

Um die Anordnung erstreckt sich ein Abschirmblech 6 aus ferromagnetischem Material. Der Stößel 3 besteht aus nicht oder nur schwach ferromagnetischem Material. Auf der Innenseite 6a des Abschirmbleches 6 ist der gesamte Positionssensor mit Auswertelektronik 7 angeordnet, an der sich die Feldsensorik 5 befindet. Ein Anschlusskabel 8 gibt die Stellungssignale an eine nicht dargestellte Steuervorrichtung weiter. Die Abschirmung verhindert, dass durch Störfelder benachbarter Sensoren oder benachbarter Teile Feldverzerrungen im Sensorbereich entstehen.

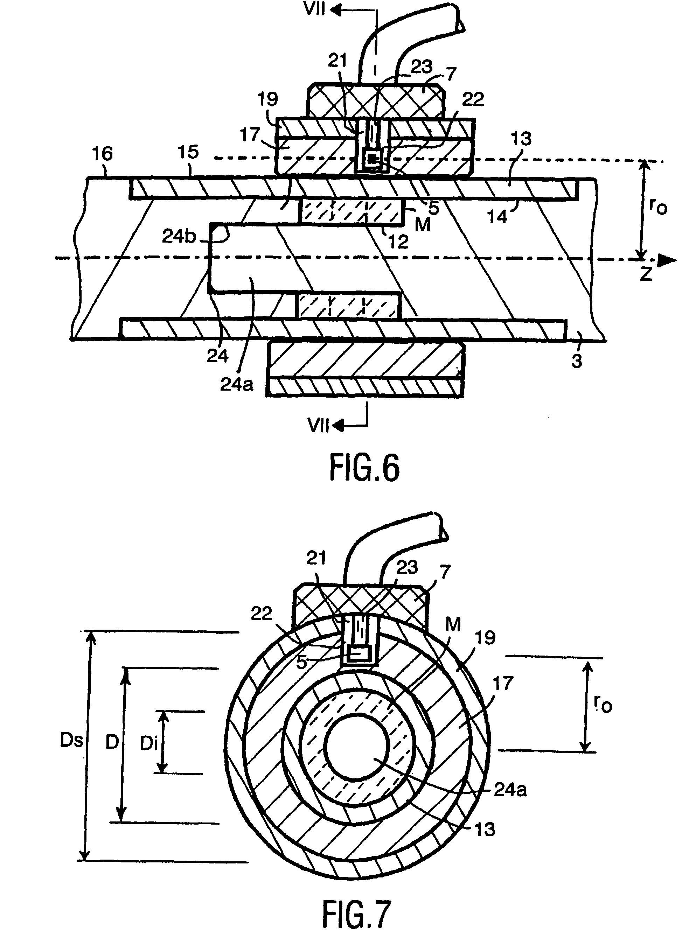

Der Stößel 3 kann, abweichend von der Darstellung in Fig. 4, auch den in Fig. 6 gezeigten Aufbau mit der in den Stößel 3 eingelassenen Magnethülse M haben. Man erkennt anhand der Konstruktion, dass der Stößel 3 gegenüber dem Sensor frei drehbar ist, ohne dass sich Messwertveränderungen ergeben können.

Fig. 5 zeigt das bereits angedeutete Diagramm der prozentualen Messfehler. Bei der nicht abgeschirmten Messvorrichtung nach Fig. 1 ergibt sich die gestrichelt dargestellte Fehlerkurve 9. Bei der abgeschirmten Messvorrichtung nach Fig. 4, bei der drei magnetische Ringkörper M1, M2, M3 oder eine axial variable Magnetisierungs-Verteilung zum Einsatz kommen, ergibt sich die mit einer durchgezogenen Linie gemessene Fehlerkurve 10. Bei dem Diagramm ist der prozentuale Messfehler $\Delta\varphi_{mes}$ über dem Verstellweg z/L aufgetragen, wobei der benutzte Verstellweg mit $z_{mes}$ eingezeichnet ist. Bei den Konfigurationen mit axial variablem Material oder mit axial variabler Magnetisierung verringert sich die Messungenauigkeit gegenüber der in Fig. 2a gezeigten ersichtlich ganz erheblich.

Fig. 6 zeigt einen anderen Aufbau der Vorrichtung im Längsschnitt. Fig. 7 zeigt einen Querschnitt der Vorrichtung nach Fig. 6 längs der Linie VII-VII. Die Magnethülse M ist in eine ringförmige Magnetausnehmung 12 des stabförmigen Bauteiles 3, beispielsweise des Ventilstößels 3, eingelassen. Die Magnethülse M kann auch in diesem Fall axial aus einem gleichförmigen Material, das vorzugsweise axial magnetisch strukturiert ist, oder aus magnetischen Ringscheiben M1, M2, M3 bestehen, wobei die Zahl drei für die Ringscheiben nur beispielhaft ist. Es können wie bei den anderen Ausführungsbeispielen auch nur zwei oder mehr als drei Ringscheiben zum Einsatz kommen. Die eventuelle Aufteilung in magnetische Ringscheiben ist in Fig. 6 angedeutet. Um die eingelassene Magnethülse M schließt sich eine nicht ferromagnetische Stößelhülse 13 größerer Länge. Diese Stößelhülse 13 ist über der Magnethülse M in eine deren Magnetausnehmung 12 überlagernde Abdeckausnehmung 14 eingesetzt. Die Außenwand 15 der Stößelhülse 13 ist vorzugsweise bündig mit der Außenwand 16 des Ventilstößels 3.

Um den Ventilstößel 3 nach Fig 6 schließt sich eine Linearführungshülse 17, in deren Hülsendurchbruch 18 er frei verschieblich und frei drehbar ist. Die Linearführungshülse 17 besteht aus nicht ferromagnetischem Material. Die Linearführungshülse 17 wird umschlossen von einer hülsenförmigen Abschirmung 19, an der die Auswertelektronik 7 der Feldsensorik 5 angeordnet ist. Die Abschirmung 19 hat einen Durchbruch 21, der als Sackbohrung 22 in die Linearführungshülse 17 hinein verlängert ist. An der Auswertelektronik 7 ist ein Träger 23 angeordnet, der die Feldsensorik 5 in der Sackbohrung 22 der Linearführungshülse 17 festhält.

Der Ventilstößel 3 ist innerhalb der Stößelhülse 13 mit einer zentrischen Zapfung 24 versehen, die aus einem zentrischen Zapfen 24a und einer zentrischen Ausnehmung 24b besteht, in die der Zapfen 24a eingreift. Ist der Ventilstößel 3 auseinandergezogen, dann lassen sich leicht die Magnethülse(n) M und die Stößelhülse 13 aufschieben.

Die Feldsensorik 5 kann in allen Fällen in bekannter Weise ausgebildet sein. So ist es möglich, paarweise magneto-resistitive Sensoren, Hallsensoren oder aber auch Feldspulen zu verwenden.

Fig. 7 zeigt einen Schnitt VI-VI durch die Vorrichtung nach Fig 6. Der im Zentrum befindliche Ventilstößel 3 aus möglichst wenig oder nicht ferromagnetischem Material wird dabei umschlossen von der (den) Magnethülse(n) M, der Stößelhülse 13 und der Linearführungshülse 17. Um die Linearführungshülse 17 schließt sich die Abschirmung 19. Die Auswertelektronik 7 trägt mittels des Trägers 21 die Feldsensorik 5. Der Abstand der Bewegungsachse z zu den Sensoren 5 ist mit $r_o$ angegeben Di ist der Innendurchmesser der Magnethülse M. D ist der Außendurchmesser der Magnethülse. Ds ist der innere Durchmesser der Abschirmung 19. L ist die axiale Länge der Magnethülse. L1, L2, L3 sind die Längen der einzelnen Ringmagneten M1, M2, M3, die zusammengesetzt die axiale Gesamtlänge der Magnethülse M erbringen.

Als Ausführungsbeispiel kann für die Vorrichtung nach Fig 6 und 7 folgende beispielhafte Dimensionierung angegeben werden:

$$r_o = 0{,}64\ D$$

$$L = D$$

$$Ds = 2xD$$

$$L1 = L2 = L3$$

Die Magnetisierung der Ringmagneten M1 und M3 sollte ca. 10% höher sein als die Magnetisierung von M2.

**Patentansprüche**

1. Vorrichtung mit

   - einem magnetischen Positionssensor (5), der aus einer Feldsensorik (5) und einer Auswertelektronik (7) besteht, und
   - einem stabförmigen Bauteil (3), das zur Ausführung von Linearbewegungen vorgesehen ist, insbesondere ein Stößel eines Aktuators, mit einer ein magnetisches Feld (4) erzeugenden axial magnetisierten Magnethülse (M), die das stabförmige Bauteil (3) selbst umschließt, mit diesem ortsfest verbunden ist und mit diesem um dessen Bewegungsachse (z) verdrehbar ist,

   wobei der Positionssensor (5) dazu ausgestattet ist, den Winkel der magnetischen Feldstärke des magnetischen Feldes (4) zur Weglängenbestimmung zu messen **dadurch gekennzeichnet, dass** die aus Magnetmaterial bestehende Magnethülse (M) entweder aus aneinander gefügten Ringscheiben (M1, M2, M3) besteht, die entweder aus Materialien mit unterschiedlicher Remanenz bestehen oder aus gleichem Material bestehen und unterschiedlich stark aufmagnetisiert sind, oder die Magnethülse (M) aus einheitlichem Material besteht, das axial unterschiedlich magnetisiert ist.

2. Vorrichtung nach Anspruch 1, **dadurch gekennzeichnet,** **dass** das stabförmige Bauteil (3) aus einem nicht oder nur schwach ferromagnetischen Material besteht.

3. Vorrichtung nach einem der Ansprüche 1 oder 2, **dadurch gekennzeichnet,** **dass** die Feldsensorik (5) des Positionssensors magneto-resistive Elemente enthält.

4. Vorrichtung nach einem der Ansprüche 1 oder 2, **dadurch gekennzeichnet,**

**dass** die Feldsensorik (5) Hallsensoren enthält.

5. Vorrichtung nach einem der Ansprüche 1 oder 2, **dadurch gekennzeichnet,** **dass** die Feldsensorik (5) Feldspulen enthält.

6. Vorrichtung nach einem der Ansprüche 1 bis 5, **dadurch gekennzeichnet,** **dass** die Magnethülse (M), sei es sie besteht aus durchgehendem Material oder sie ist zusammengesetzt aus Ringscheiben (M1, M2, M3), zur Bildung einer Mindestfeldstärke ein Verhältnis von Durchmesser zu Länge im Bereich von 2/3 bis 3/2, vorzugsweise in der Nähe von 1 aufweist.

7. Vorrichtung nach einem der Ansprüche 1 bis 6, **dadurch gekennzeichnet,** **dass** die Feldsensorik (5) auf der Innenseite (6a) einer hülsenförmigen Abschirmung (6) angeordnet sind.

8. Vorrichtung nach einem der Ansprüche 1 bis 7, **dadurch gekennzeichnet,** **dass** sich innerhalb der Abschirmung (6) eine Auswertelektronik (7) mit Feldsensorik (5) befindet.

9. Vorrichtung nach einem der Ansprüche 1 bis 8, **dadurch gekennzeichnet,** **dass** die Magnethülse (M) in eine ringförmige Ausnehmung (12) des stabförmigen Bauteiles (3) eingelassen ist und sich um die eingelassene Magnethülse (M) eine nicht ferromagnetische Stößelhülse (13) größerer Länge als die der Magnethülse (M) schließt.

10. Vorrichtung nach Anspruch 9, **dadurch gekennzeichnet,** **dass** auch die Stößelhülse (13) in das stabförmige Bauteil (3) eingelassen ist.

11. Vorrichtung nach einem der Ansprüche 1 bis 7 und 9 und 10, **dadurch gekennzeichnet,** **dass** das stabförmige Bauteil (3) von einer nicht ferromagnetischen Linearführungshülse (17) umschlossen ist, in deren Hülsendurchbruch (18) es mit der Magnethülse (M) gleiten kann, und dass die nicht ferromagnetische Linearführungshülse (17) von einer hülsenförmigen Abschirmung (19) umschlossen ist, innerhalb der sich die Feldsensorik (5) befindet.

12. Vorrichtung nach einem der Ansprüche 9 bis 11, **dadurch gekennzeichnet,** **dass** die Auswertelektronik (7) an der Außenseite der Abschirmung (19) angeordnet ist und mittels eines durch die Abschirmung (19) hindurchgeführten Trägers (23) die Feldsensorik (5) innerhalb der Linearführungshülse (17) trägt.

**13.** Vorrichtung nach einem der Ansprüche 9 bis 14, <u>**dadurch gekennzeichnet,**</u> **dass** das stabförmige Bauteil (3) im Bereich der Messvorrichtung aus zwei mittels einer zentrischen Zapfung (24) verbundenen Teilen besteht und dass die Magnethülse (M) sowie die Stößelhülse (13) im Bereich der Zapfung (24) auf das stabförmige Bauteil (3) aufgeschoben sind.

**Claims**

**1.** A device with a

- magnetic position sensor (5) comprising a field sensor system (5) and analysis electronics (7), and

- a rod-shaped component (3) provided for carrying out linear displacements, in particular a shaft of an actuator, with an axially magnetized magnet casing (M) generating a magnetic field (4), which magnet casing surrounds the rod-shaped component (3) itself, is fixedly connected thereto and can rotate therewith about its displacement axis (z),

  wherein the position sensor (5) is equipped to measure the angle of the magnetic field strength of the magnetic field (4) for path length determination, **characterized in that** the magnet casing (M) of magnetic material is composed of interlinked ring discs (M1, M2 and M3) consisting of materials of different remanence or of the same material, in which case the ring bodies are magnetized to different intensities, or the magnet casing (M) consists of a uniform material which is axially magnetized to different intensities.

**2.** A device as claimed in claim 1, **characterized in that** the rod-shaped component (3) consists of a non-ferromagnetic or only weakly ferromagnetic material.

**3.** A device as claimed in claim 1 or 2, **characterized in that** the field sensor system (5) of the position sensor comprises magnetoresistive elements.

**4.** A device as claimed in claim 1 or 2, **characterized in that** the field sensor system (5) comprises Hall effect sensors.

**5.** A device as claimed in claim 1 or 2, **characterized in that** the field sensor system (5) comprises field coils.

**6.** A device as claimed in any one of claims 1 to 5, **characterized in that** the magnet casing (M), either consisting of a continuous material or assembled from ring discs (M1, M2, M3) has a ratio of diameter to length ranging from 2/3 to 3/2, preferably in the proximity of 1, so as to form a minimum field strength.

**7.** A device as claimed in any one of claims 1 to 6, **characterized in that** the field sensor system (5) is arranged on the inner side (6a) of a casing-shaped screen (6).

**8.** A device as claimed in any one of claims 1 to 7, **characterized in that** analysis electronics (7) with a field sensor system (5) is situated within the screen (6).

**9.** A device as claimed in any one of claims 1 to 8, **characterized in that** the magnet casing (M) is let into a ring-shaped recess (12) of the rod-shaped component (3) and the inlet magnet casing (M) is surrounded by a non-ferromagnetic shaft casing (13) of greater length than that of the magnet casing (M).

**10.** A device as claimed in claim 9, **characterized in that** the shaft casing (13) is also let into the rod-shaped component (3).

**11.** A device as claimed in any one of claims 1 to 7 and 9 and 10, **characterized in that** the rod-shaped component (3) is surrounded by a non-ferromagnetic linear guide casing (17), in the casing opening (18) of which it can slide with the magnet casing (M), and **in that** the non-ferromagnetic linear guide casing (17) is surrounded by a casing-shaped screen (19) within which the field sensor system (5) is situated.

**12.** A device as claimed in any one of claims 9 to 11, **characterized in that** the analysis electronics (7) is arranged on the outer side of the screen (19) and carries the field sensor system (5) within the linear guide casing (17) by means of a carrier (23) passed through the screen (19).

**13.** A device as claimed in any one of claims 9 to 14, **characterized in that** the rod-shaped component (3) in the area of the measurement device consists of two parts connected together by means of a central pin arrangement (24), and **in that** the magnet casing (M) and the shaft casing (13) are slipped onto the rod-shaped component (3) in the area of the pin arrangement (24).

**Revendications**

**1.** Dispositif avec

- un capteur de position (5) magnétique qui se compose d'un capteur de champ (5) et d'une électronique d'évaluation (7) et

- un composant (3) en forme de barre qui est prévu pour l'exécution de mouvements linéaires, en particulier un poussoir d'un actionneur avec un manchon magnétique (M) magnétisé axialement produisant un champ magnétique (4) qui renferme le composant (3) en forme de barre lui-même, est fixé à demeure avec celui-ci et peut tourner avec celui-ci autour de son axe de rotation (z),

le capteur de position (5) étant équipé pour mesurer l'angle de l'intensité de champ magnétique du champ magnétique (4) pour la détermination de la longueur de course, **caractérisé en ce que** le manchon magnétique (M) composé d'un matériau magnétique se compose soit de disques annulaires (M1, M2, M3) assemblés l'un à l'autre qui consistent soit en matériaux de rémanence différente ou en un même matériau mais avec une magnétisation d'intensité différente ou le manchon magnétique (M) se compose d'un matériau uniforme qui est magnétisé de manière variable en direction axiale.

2. Dispositif selon la revendication 1,
   **caractérisé en ce**
   **que** le composant (3) en forme de barre se compose d'un matériau non ferromagnétique ou seulement faiblement.

3. Dispositif selon l'une des revendications 1 ou 2,
   **caractérisé en ce**
   **que** le système de capteurs de champ (5) du capteur de position contient des éléments magnétorésistifs.

4. Dispositif selon l'une des revendications 1 ou 2,
   **caractérisé en ce**
   **que** le système de capteurs de champ (5) contient des capteurs de Hall.

5. Dispositif selon l'une des revendications 1 ou 2,
   **caractérisé en ce**
   **que** le système de capteurs de champ (5) contient des bobines de champ.

6. Dispositif selon l'une des revendications 1 à 5,
   **caractérisé en ce**
   **que** le manchon magnétique (M), qu'il se compose d'un matériau continu ou qu'il consiste en disques annulaires (M1, M2, M3), présente un rapport diamètre/longueur de l'ordre de 2/3 à 3/2, de préférence proche de 1 pour la formation d'une intensité de champ minimale.

7. Dispositif selon l'une des revendications 1 à 6,

**caractérisé en ce**
**que** le système de capteurs de champ (5) est disposé sur la face intérieure (6a) d'un blindage (6) en forme de manchon.

8. Dispositif selon l'une des revendications 1 à 7,
   **caractérisé en ce**
   **qu'**une électronique d'évaluation (7) avec système de capteurs de champ (5) se trouve à l'intérieur du blindage (6).

9. Dispositif selon l'une des revendications 1 à 8,
   **caractérisé en ce**
   **que** le manchon magnétique (M) est inséré dans un évidement (12) de forme annulaire du composant en forme de barre (3) et un manchon de poussoir ferromagnétique (13) de plus grande longueur que le manchon magnétique (M) entoure le manchon magnétique (M) inséré.

10. Dispositif selon la revendication 9,
    **caractérisé en ce**
    **que** le manchon de poussoir (13) est inséré également dans le composant (3) en forme de barre.

11. Dispositif selon l'une des revendications 1 à 7 et 9 et 10,
    **caractérisé en ce**
    **que** le composant (3) en forme de barre est entouré d'un manchon de guidage linéaire (17) non ferromagnétique dans les passages de manchon duquel (18) il peut glisser avec le manchon magnétique (M) et que le manchon de guidage linéaire (17) non ferromagnétique est entouré par un blindage (19) en forme de manchon dans lequel se trouve le système de capteurs de champ (5).

12. Dispositif selon l'une des revendications 9 à 11,
    **caractérisé en ce**
    **que** l'électronique d'évaluation (7) est disposée contre la face externe du blindage (19) et porte le système de capteurs de champ (5) dans le manchon de guidage linéaire (17) à l'aide d'un support (23) traversant le blindage (19).

13. Dispositif selon l'une des revendications 9 à 14,
    **caractérisé en ce**
    **que** le composant (3) en forme de barre se compose de deux parties reliées à l'aide d'un tourillon central (24) dans la région du dispositif de mesure et que le manchon magnétique (M) ainsi que le manchon de poussoir (13) sont enfoncés sur le composant en forme de barre (3) dans la région du tourillon (24).

FIG.1

FIG.3

8

FIG.2a

FIG.2b

FIG.4

FIG.5

FIG.6

FIG.7